# EUROPEAN PATENT APPLICATION

(11) **EP 4 418 359 A1**
(43) Date of publication of application: **21.08.2024**
(21) Application number: 24158230.3
(22) Date of filing: 16.02.2024
(51) Int. Cl.: H01M 4/36, H01M 4/38, H01M 4/48, H01M 4/587, H01M 10/0525, H01M 10/0567, H01M 10/0569, H01M 50/105

(54) **ELECTROLYTE SOLUTION FOR SECONDARY BATTERY AND SECONDARY BATTERY INCLUDING THE SAME**

(30) Priority: 20.02.2023 KR 20230022269; 24.10.2023 KR 20230142973
(71) Applicant: SK On Co., Ltd., Seoul 03161 (KR); SK Innovation Co., Ltd., Seoul 03188 (KR)
(72) Inventor: PARK, Ki Sung, 34124 Daejeon (KR); JEON, Hyun Ji, 34124 Daejeon (KR)
(74) Representative: Stolmár & Partner Patentanwälte PartG mbB

(57) **Abstract**

An electrolyte solution for a lithium secondary battery according to embodiments of the present disclosure includes a lithium salt, a non-aqueous organic solvent, and a silatane-based having a specific chemical structure. A secondary battery includes the electrolyte solution for a lithium secondary battery. The secondary battery has improved high temperature storage properties and life-span properties.

## Description

### BACKGROUND

### 1. Field

The present disclosure invention relates to an electrolyte solution for a secondary battery and a lithium secondary battery including the same. More particularly, the present disclosure relates to an electrolyte solution for a secondary battery including an additive, and a secondary battery including the same.

### 2. Description of the Related Art

A secondary battery which can be charged and discharged repeatedly has been widely employed as a power source of a mobile electronic device such as a camcorder, a mobile phone, a laptop computer. Examples of the secondary battery include a lithium secondary battery, a nickel-cadmium battery, a nickel-hydrogen battery, etc. For example, the lithium secondary battery is widely developed and applied due to high operational voltage and energy density per unit weight, a high charging rate, a compact dimension, etc.

For example, the secondary battery may include an electrode assembly including a cathode, an anode and a separation layer (separator), and an electrolyte solution immersing the electrode assembly. The lithium secondary battery may further include an outer case having, e.g., a pouch shape for accommodating the electrode assembly and the electrolyte solution.

For example, when charging and discharging of active material particles included in the cathode or the anode is repeated, a side reaction may occur due to a contact with an electrolyte, and mechanical and chemical damage such as cracks of the particles may be generated. If a composition or a structure of the active material is modified in order to improve stability of the active material particles, a conductivity may be lowered to cause degradation of a power of the secondary battery.

### SUMMARY

According to an aspect of the present invention, there is provided an electrolyte solution providing improved stability and activity.

According to an aspect of the present invention, there is provided a secondary battery having improved stability and activity.

An electrolyte solution for a secondar battery includes a lithium salt, a non-aqueous organic solvent, and a silatane-based compound represented by Chemical Formula 1.

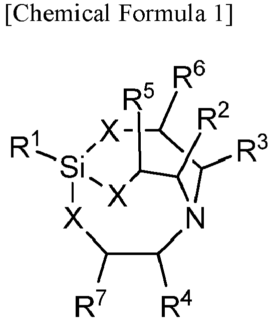

In Chemical Formula 1, X is each independently oxygen, sulfur, nitrogen or phosphorus. R¹ is an electron donating group, a C2 to C10 tertiary aminoalkyl group, a C1 to C10 haloalkyl group, a C6 to C15 aryl group, a C6 to C15 haloaryl group, or a hydrocarbon group including at least one selected the group consisting of a C1 to C10 alkyl group, a C1 to C10 haloalkyl group, a sulfonyloxy group, a C1 to C10 alkylene group and a C3 to C15 trialkylsilyloxy group. R², R³, R⁴, R⁵, R⁶ and R⁷ are each independently hydrogen, a C1 to C6 linear alkyl group, a C3 to C6 branched alkyl group or a C3 to C6 cyclic alkyl group.

In some embodiments, the electron donating group may include at least one selected from the group consisting of a C1 to C10 alkoxy group, a cyano group, a halogen group, a vinyl group, a hydroxy group, a primary to tertiary amine group, an imine group, a thiol group and a sulfide group.

In some embodiments, in Chemical Formula 1, X may be oxygen.

In some embodiments, in Chemical Formula 1, R¹ may be a methoxy group, an ethoxy group, a propoxy group, a dimethylamine group, a diethylamine group, a methylethylamine group, a dimethylaminomethyl group, a dimethylaminoethyl group, a dimethylaminopropyl group, a methylethylaminomethyl group, a methylethylaminoethyl group, a methylethylaminopropyl group, a diethylaminomethyl group, a diethylaminoethyl group, a diethylaminopropyl group, a trifluoromethyl group, a trifluoroethyl group, a trifluoropropyl group, a phenyl group, a naphthyl group, a fluorophenyl group, a difluorophenyl group, a trifluorophenyl group, a tetrafluorophenyl group, a pentafluorophenyl group, a methylsulfonyloxymethylene group, a ethylsulfonyloxymethylene group, a trifluoromethylsulfonyloxymethylene group, a pentafluoroethylsulfonyloxymethylene group or a trimethylsilyloxymethylene group.

In some embodiments, in Chemical Formula 1, R², R³, R⁴, R⁵, R⁶ and R⁷ may each be hydrogen.

In some embodiments, a content of the silatrane-based compound may be in a range from 0.1 wt% to 5.0 wt% based on a total weight of the electrolyte solution.

In some embodiments, an auxiliary additive that includes at least one selected from the group consisting of a fluorine-containing carbonate-based compound, a vinylidene carbonate-based compound and a sulfinyl group-containing compound may be further included.

In some embodiments, the fluorine-containing carbonate-based compound may include fluoroethylene carbonate, the vinylidene carbonate-based compound may include vinylethylene carbonate, and the sulfinyl group-containing compound may include at least one of 1,3-propane sultone and ethylene sulfate.

In some embodiments, a content of the auxiliary additive may be in a range from 0.1 wt% to 10 wt% based on a total weight of the electrolyte solution.

A secondary battery includes a cathode including a lithium metal oxide, an anode facing the cathode and including a carbon-based active material or a silicon-based active material, and the electrolyte solution for a secondary battery according to the above-described embodiments.

In some embodiments, the anode may include the carbon-based active material and the silicon-based active material, and the silicon-based active material may be included in an amount from 0.1 parts by weight to 50 parts by weight based on 100 parts by weight of the carbon-based active material.

In some embodiments, a coating layer derived from the silatrane-based compound may be formed on a surface of an active material of the anode.

In some embodiments, a C-X bond may be formed between the carbon-based active material and the coating layer derived from the silatrane-based compound.

In some embodiments, a Si-X bond may be formed between the silicon-based active material and the coating layer derived from the silatrane-based compound.

The electrolyte solution for a secondary battery according to the present disclosure may improve storage properties and capacity properties of a cathode.

In example embodiments, a silatrane-based compound contained in the electrolyte solution for a secondary battery may form a coating layer on a surface of an anode for a secondary battery. A coating layer may also be formed on a surface of an anode active material included in the anode by the silatrane-based compound. Accordingly, exposure of the anode active material to the electrolyte solution may be reduced. A contact between the cathode active material dissolved in the electrolyte solution and the anode active material may be suppressed by the coating layer. Thus, even though charging and discharging of the battery may be repeated, reduction of the capacity from the anode may be prevented.

In example embodiments, a chemical bond may be formed between the silatane-based compound contained in the electrolyte solution for a secondary battery and the anode active material. Through the formation of the chemical bond, a coating layer may be formed on the surface of the anode active material. High-temperature storage of the anode active material may be improved by the coating layer.

In example embodiments, the secondary battery includes the electrolyte solution for a secondary battery, and may have improved capacity, storage and life-span properties.

### BRIEF DESCRIPTION OF THE DRAWINGS

FIG. 1 is a schematic plan view illustrating a secondary battery in accordance with example embodiments.
FIG. 2 is a schematic cross-sectional view illustrating a secondary battery in accordance with example embodiments.
FIGS. 3 to 10 are ¹H NMR spectra of compounds of Preparation Examples 1 to 8, respectively.

### DETAILED DESCRIPTION OF THE EMBODIMENTS

The term "Ca to Cb" used herein refers that the number of carbon atoms in a functional group is in a range from a to b.

The term "substituted" used herein may refer that any hydrogen of a moiety is substituted with at least one of a cyano group, a halogen group (e.g., a fluorine atom), a vinyl group, a hydroxyl group, a primary to tertiary amine group, an imine group, a thiol group, a sulfide group, a C1 to C6 alkyl group, a C2 to C6 alkenyl group, a C1 to C6 alkoxy group and a C6 to C12 phenoxy group.

The electrolyte solution for a secondary battery according to embodiments of the present disclosure may include a lithium salt, a non-aqueous organic solvent, and a silatane-based compound represented by Chemical Formula 1.

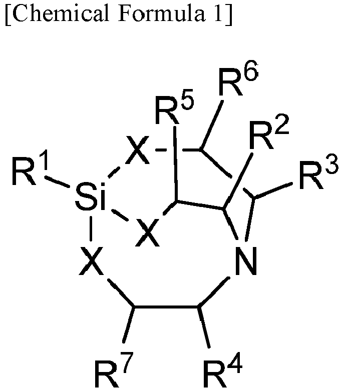

In Chemical Formula 1, X may each independently be oxygen, sulfur, nitrogen, or phosphorus. R¹ may be an electron donating group, a C2 to C10 tertiary aminoalkyl group, a C1 to C10 haloalkyl group, a C6 to C15 aryl group, a C6 to C15 haloaryl group, or a hydrocarbon group including at least one selected the group consisting of a C1 to C10 alkyl group, a C1 to C10 haloalkyl group, a sulfonyloxy group, a C1 to C10 alkylene group and a C3 to C15 trialkylsilyloxy group. R², R³, R⁴, R⁵, R⁶ and R⁷ may each independently be hydrogen, a C1 to C6 linear alkyl group, a C3 to C6 branched alkyl group or a C3 to C6 cyclic alkyl group.

The term "electron donating group" used herein may refer to an atom or functional group capable of increasing an electron density by pushing electrons toward a bonded atom.

The "alkyl group" used herein refers to an aliphatic saturated hydrocarbon group that may be linear or branched. The "alkylene group" used herein may be a divalent saturated hydrocarbon group from which one hydrogen of the alkyl group is removed.

The "alkoxy group" used herein may refer to an alkyl group bonded through oxygen.

The "tertiary aminoalkyl group" used herein may refer to an alkyl group to which an amine group having two substituents is bonded. For example, the tertiary aminoalkyl group may be a dialkyl aminoalkyl group.

The "haloalkyl group" used herein may refer to a group obtained by substituting at least one hydrogen in the alkyl group with halogen. For example, hydrogen bonded to an end of the alkyl group may be substituted with halogen, or hydrogen bonded to an alkylene group in the middle of the alkyl groups may be substituted with a halogen. Halogen may include fluorine, chloride, bromine, iodine, etc.

The term "aryl group" used herein may refer to a single ring or a multiple ring structured substituent containing an aromatic ring.

The "haloaryl group" used herein may refer to a group in which at least one hydrogen of the aryl group is substituted with halogen. Halogen may include fluorine, chloride, bromine, iodine, etc.

The term "cyclic alkyl group" used herein may refer to an alicyclic saturated hydrocarbon group, and may refer to an alkyl group with a cyclic structure.

The "sulfonyloxy group" may be represented by -S(=O)₂-O-. The sulfonyloxy group includes two oxygen atoms linked by a double bond to a sulfur atom, and an oxygen atom linked by a single bond to the sulfur atom, and each of the sulfur atom and the oxygen atom may be a divalent organic group having a binding site.

Each of the alkyl group, the alkoxy group, the tertiary aminoalkyl group, the haloalkyl group, the aryl group, and the cyclicalkyl group may be substituted or unsubstituted.

In example embodiments, the silatane-based compound represented by Chemical Formula 1 may form a coating layer on a surface of the anode active material included in an anode of the secondary battery above. A direct contact between the electrolyte solution and the anode active material may be blocked by the coating layer. Additionally, volume change and loss of the anode active material may be suppressed while charging and discharging the secondary battery.

In example embodiments, a nitrogen atom of Chemical Formula 1 may donate an electron to a silicon atom of Chemical Formula 1, and a coordination bond may be formed between the nitrogen atom and the silicon atom. Additionally, the silicon atom may partially have a negative charge by the coordination bond formed between the nitrogen atom and the silicon atom,

In example embodiments, R¹ bonded to the silicon atom of Chemical Formula 1 may be an electron donating group; a C2 to C10 tertiary aminoalkyl group; a C1 to C10 haloalkyl group; a C6 to C15 aryl group; a C6 to C15 haloaryl group; or a hydrocarbon group including at least one selected from the group consisting of a C1 to C10 alkyl group, a C1 to C10 haloalkyl group, a sulfonyloxy group, a C1 to C10 alkylene group and a C3 to C15 trialkylsilyloxy group. R¹ may function as an electron donor. R¹ may be bonded to the silicon atom to donate an electron to the silicon atom through a resonance effect, an induction effect, etc., and may increase a partial negative charge of the nitrogen atom of Chemical Formula 1.

For example, the electron donating group may include a C1 to C10 alkoxy group, a cyano group, a halogen group (e.g., a fluorine atom), a vinyl group, a hydroxy group, a primary to tertiary amine group, an imine group, a thiol group, a sulfide group, etc.

For example, R¹ may include an alkoxy group such as a methoxy group, an ethoxy group, a propoxy group, etc.; a tertiary aminoalkyl group such as a dimethylamine group, a diethylamine group, a methylethylamine group, a dimethylaminomethyl group, a dimethylaminoethyl group, a dimethylaminopropyl group, a methylethylaminomethyl group, a methylethylaminoethyl group, a methylethylaminopropyl group, a diethylaminomethyl group, a diethylaminoethyl group, a diethylaminopropyl group, etc.; a haloalkyl group such as a trifluoromethyl group, a trifluoroethyl group, a trifluoropropyl group, etc.; an aryl group such as a phenyl group, a naphthyl group, etc.; a haloaryl group such as a fluorophenyl group, a difluorophenyl group, a trifluorophenyl group, a tetrafluorophenyl group, a pentafluorophenyl group, etc.

In some embodiments, R¹ may be a hydrocarbon group including at least one selected from the group consisting of a C1 to C10 alkyl group, a C1 to C10 haloalkyl group, a sulfonyloxy group, a C1 to C10 alkylene group and a C3 to C15 trialkylsilyloxy group. For example, R¹ may be a hydrocarbon group including at least one selected from the group consisting of a C1 to C3 alkyl group, a C1 to C3 haloalkyl group, a sulfonyloxy group, a C1 to C3 alkylene group and a C3 to C6 trialkylsilyloxy group.

For example, R¹ may be a C6 to C15 haloaryl group. In this case, a more robust coating layer may be formed on the surface of the anode active material, and side reactions between the electrolyte solution and the anode active material may be suppressed. Accordingly, capacity reduction or volume expansion may be prevented in a storage at high temperature.

For example, R¹ may include the sulfonyloxy group. In this case, even during the repeated charging and discharging of the battery, the capacity of the battery may be maintained without a large reduction from the initial capacity, and the life-span properties of the battery may be improved.

For example, R¹ may include the trialkylsilyloxy group. In this case, even when the battery is stored at high temperature for a long period, an amount of gas generated at an inside of the battery may be reduced, and a dimensional stability of the battery may be improved.

The above-listed R¹ may be employed, so that dissociation of a Si-X bond may be promoted. Additionally, the formation of the coating layer derived from the silatrane-based compound may be further promoted, and high-temperature storage properties of the secondary battery may be further improved.

In example embodiments, the partial negative charge of the silicon atom may be formed to increase nucleophilicity of a single bond formed at the silicon atom, and a reactivity between the electrophilic anode active material and the single bond may be increased.

Thus, an electron pair forming the single bond may be donated so that a chemical bond may be formed between the anode active material and X of Chemical Formula 1. Further, the coating layer derived from the silatrane-based compound may be formed on the surface of the anode active material.

In some embodiments, R¹ may be a phenyl group, a methoxy group, a dimethylaminopropyl group, a trifluoropropyl group, a methylsulfonyloxymethyl group, a trifluoromethylsulfonyloxymethyl group, a trimethylsilyloxymethyl group, or a pentafluoro phenyl group. In this case, R¹ may act as a nucleophilic functional group, and an intramolecular substitution reaction may occur. In some embodiments, R¹ may react with the anode active material to additionally form a covalent bond.

The covalent bond may be formed with the anode active material, so that the silatrane-based compound may be induced to the surface of the anode active material by R¹. R¹ may primarily fix the silatrane-based compound on the surface of the anode active material to promote the formation of the coating layer on the surface of the anode active material. Accordingly, cohesion of the coating layer may be further improved.

X in Formula 1 may have a negative charge due to dissociation of the single bond with the silicon atom, and X having the negative charge may act as a nucleophile. In example embodiments, a chemical bond may be formed between X having the negative charge, and the anode active material. The chemical bond may be a single bond such as SiX or C-X.

In example embodiments, X may be oxygen. In this case, the single bond between the silicon atom and the oxygen atom may be dissociated to forming an oxide.

The oxide may react with the anode active material to form a covalent bond. The covalent bond formed between the anode active material and the oxide may be one or more of a Si-O bond and a C-O bond. When the Si-O bond is formed, cohesion of the coating layer formed on the surface of the anode active material may be further enhanced due to high affinity between silicon and oxygen.

In example embodiments, R², R³, R⁴, R⁵, R⁶ and R⁷ may each be hydrogen. In this case, the action of R¹ as the nucleophilic functional group may be further promoted.

In the electrolyte solution for a secondary battery according to some embodiments, a content of the silatrane-based compound may be in a range from 0.1 weight percent (wt%) to 5.0 wt% based on a total weight of the electrolyte solution. In an embodiment, the content of the silatrane-based compound may be in a range from 0.5 wt% to 3 wt%, from 0.5 wt% to 2 wt%, or from 0.5 wt% to 1 wt% based on the total weight of the electrolyte solution.

In the above content range, agglomeration of the coating layer derived from the silatrane-based compound may be prevented, the coating layer can be formed uniformly. Further, the life-span properties of the secondary battery containing the above-described electrolyte solution for a secondary battery may be improved.

The electrolyte solution for a secondary battery according to some embodiments may further include an auxiliary additive including at least one compound selected from the group consisting of a fluorine-containing carbonate-based compound, a vinylidene carbonate-based compound, and a sulfinyl group (S=O)-containing compound.

In example embodiments, the fluorine-containing carbonate-based compound may include fluoroethylene carbonate, the vinylidene carbonate-based compound may include vinylethylene carbonate, and the sulfinyl group-containing compound may include 1,3-propane sultone and/or ethylene sulfate.

The above-described auxiliary additive may be further included, so that high-temperature storage property and high-temperature stability of the secondary battery containing the electrolyte solution may be further improved.

In some embodiments, the fluorine-containing carbonate-based compound may include fluoroethylene carbonate (FEC), difluoroethylene carbonate (DFEC), fluorodimethylcarbonate (FDMC), and fluoroethylmethyl carbonate (FEMC) or a mixture thereof.

In some embodiments, the vinylidene carbonate-based compound may include vinylene carbonate (VC), vinyl ethylene carbonate (VEC), or a mixture thereof.

In some embodiments, the sulfinyl group-containing compound may include at least one selected from the group consisting of a sulfone compound, a sulfite compound, a sulfonate compound, a sultone compound and a sulfate compound.

Non-limiting examples of the sulfone compound may include dimethyl sulfone, diethyl sulfone, ethyl methyl sulfone, methyl vinyl sulfone, divinyl sulfone, or a mixture thereof.

Non-limiting examples of the sulfite compounds may include ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimethyl propylene sulfite, 4,6-diethyl propylene sulfite, 1,3-butylene glycol sulfite, or a mixture thereof.

Non-limiting examples of the sulfonate compound may include methyl methanesulfonate, ethyl methanesulfonate, methyl ethanesulfonate, propyl methanesulfonate, methyl propanesulfonate, ethyl propanesulfonate, vinyl methanesulfonate, allyl methanesulfonate, vinyl benzenesulfonate, allyl prop-2-enesulfonate, or a mixture thereof.

Non-limiting examples of the sultone compound may include ethanesultone, 1,3-propane sultone (PS), 1,4-butane sultone, ethenesultone, 1,3-propene sultone, 3-fluoro-1,3-propane sultone, 1,4-butene sultone, or a mixture thereof.

Non-limiting examples of the sulfate compound may include ethylene sulfate (ESA), propylene sulfate, 2,3-butylene sulfate, 1,3-propylene sulfate, 1,3-butylene sulfate, or a mixture thereof.

In some embodiments, the fluorine-containing carbonate-based compound may include fluoroethylene carbonate, the vinylidene carbonate-based compound may include vinylethylene carbonate, and the sulfinyl group-containing compound may include 1,3-propane sultone and/or ethylene sulfate.

The above-described auxiliary additive may be included, so that the high-temperature storage property and high-temperature stability of the secondary battery including the electrolyte solution may be further improved.

In some embodiments, the auxiliary additive may be included in an amount from 0.1 wt% to 10 wt% based on the total weight of the electrolyte solution.

In the content range of the auxiliary additive, the high-temperature stability and the capacity retention of the secondary battery may be enhanced and a rapid life-span degradation may be prevented.

In the electrolyte solution for a secondary battery according to example embodiments, the electrolyte solution may include a lithium salt as an electrolyte and a non-aqueous organic solvent, and the lithium salt is expressed, e.g., as Li⁺X⁻. Examples of the anion X⁻ of the lithium salt include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻.

The lithium salt may be included in a concentration of 0.1 M to 2.0 M. In the concentration range, a conductivity of the electrolyte solution and a mobility of lithium ions may both be improved.

Examples of the non-aqueous organic solvent include propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, sulfolane, gamma-butyrolactone, tetrahydrofuran, etc. These may be used alone or in a combination of two or more therefrom.

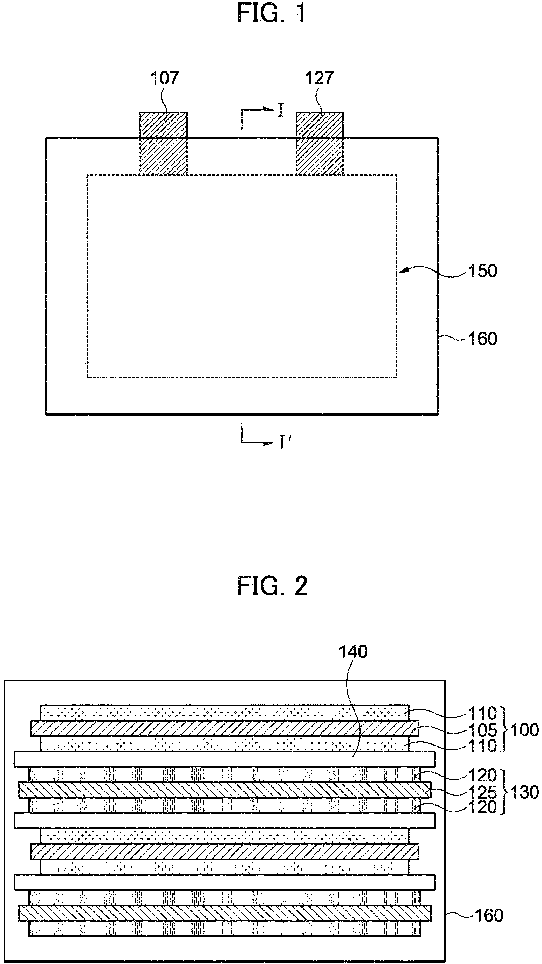

FIGS. 1 and 2 are a schematic plan view and a schematic cross-sectional view, respectively, illustrating a lithium secondary battery in accordance with exemplary embodiments. For example, FIG. 2 is a cross-sectional view taken along a line I-I' shown in FIG. 1 in a thickness direction of a secondary battery. The secondary battery shown in FIGS. 1 and 2 are provided for convenience of descriptions, and the secondary battery of the present disclosure is not limited to the structure/shape illustrated in FIGS. 1 and 2.

Referring to FIGS. 1 and 2, the secondary battery may be provided as a lithium secondary battery. In example embodiments, the secondary battery may include an electrode assembly 150 and a case 160 accommodating the electrode assembly 150. The electrode assembly 150 may include a cathode 100, an anode 130 and a separator 140.

The cathode 100 may include a cathode current collector 105 and a cathode active material layer 110 formed on at least one surface of the cathode current collector 105. In example embodiments, the cathode active material layer 110 may be formed on both surfaces (e.g., upper and lower surfaces) of the cathode current collector 105. For example, the cathode active material layer 110 may be coated on each of the upper surface and the lower surface of the cathode current collector 105, and may be directly coated on the surface of the cathode current collector 105.

The anode current collector 105 may include, e.g., stainless steel, nickel, aluminum, titanium, copper, or an alloy thereof, preferably aluminum or an aluminum alloy.

The cathode active material layer 110 may include a lithium metal oxide as a cathode active material, and may include a lithium (Li)-nickel (Ni)-based oxide according to example embodiments.

In some embodiments, the lithium metal oxide included in the cathode active material layer 110 may be represented by Chemical Formula 2 below.

[Chemical Formula 2] LiₓNi_{1-y}M_{y}O_{2-z}X_{z}

In Chemical Formula 2, 0.9≤x≤1.1, 0≤y≤0.7, and -0.1≤z≤0.1. M may include at least one element selected from the group consisting of Mg, Sr, Ba, B, Al, Si, Mn, Ti, Zr, Co and W, and X may represent an element selected from O, F, S and P.

In some embodiments, in Chemical Formula 2, M may include manganese (Mn). In one embodiment, a nickel-cobalt-manganese (NCM)-based lithium oxide may be used as the cathode active material.

For example, nickel (Ni) may serve as a metal related to a capacity of the lithium secondary battery. As a content of nickel becomes greater, the capacity of the lithium secondary battery may be increased. However, an excessively high nickel content may degrade a life-span of the battery, and may be disadvantageous from an aspect of mechanical and electrical stability.

In one embodiment, a molar ratio (1-y) of nickel in Chemical Formula 2 may be in a range from 0.8 to 0.95. In this case, the power and the capacity may be increased through a high-Ni cathode composition.

For example, cobalt (Co) may serve as a metal related to a conductivity or a resistance, and the power of a lithium secondary battery. In one embodiment, M includes manganese (Mn), and Mn may serve as a metal related to mechanical and electrical stability of the lithium secondary battery.

From the above-described interaction of nickel, cobalt and manganese, the capacity, the power, the conductivity and life-span stability may be improved together in the cathode active material layer 110.

In some embodiments, the lithium metal oxide may be represented by Chemical Formula 3 below. The lithium metal oxide represented by Chemical Formula 3 may have an olivine structure.

[Chemical Formula 3] LiMPO₄

In Chemical Formula 3, M may include at least one element of Fe, Mn, Ni, Co and V.

For example, a slurry may be prepared by mixing and stirring a cathode active material with a binder, a conductive material and/or a dispersive agent in a solvent. The slurry may be coated on the cathode current collector 105, and then dried and pressed to form the cathode active material layer 110.

The binder may include, e.g., an organic binder such as vinylidene fluoride-hexafluoropropylene copolymer (PVDF-co-HFP), polyvinylidene fluoride (PVDF), polyacrylonitrile, polymethylmethacrylate, or an aqueous binder such as styrene-butadiene rubber (SBR), and may be used together with a thickener such as carboxymethyl cellulose (CMC).

For example, a PVDF-based binder may be used as the cathode binder. In this case, an amount of the binder for forming the cathode active material layer may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

In some embodiments, an electrode density of the cathode 100 may be in a range from 3.0 g/cc to 3.9 g/cc, preferably from 3.2 g/cc to 3.8 g/cc.

The anode 130 may include an anode current collector 125 and an anode active material layer 120 formed on at least one surface of the anode current collector 125. In example embodiments, the anode active material layer 120 may be formed on both surfaces (e.g., upper and lower surfaces) of the anode current collector 125. The anode active material layer 120 may be coated on each of the upper surface and the lower surface of the anode current collector 125. For example, the anode active material layer 120 may directly contact the surface of the anode current collector 125.

The anode current collector 125 may include gold, stainless steel, nickel, aluminum, titanium, copper, or an alloy thereof, preferably copper or a copper alloy.

In example embodiments, the anode active material layer 120 may include an anode active material capable of intercalating and de-intercalating lithium ions. The anode active material may include a lithium alloy, a carbon-based active material, and/or a silicon (Si)-based active material.

The carbon-based active material may include a crystalline carbon, an amorphous carbon, a carbon composite and/or a carbon fiber.

Examples of the amorphous carbon may include hard carbon, coke, mesocarbon microbeads (MCMB), mesophase pitch-based carbon fiber (MPCF), etc.

Examples of the crystalline carbon may include a graphite-based carbon such as natural graphite, artificial graphite, graphitized coke, graphitized MCMB, graphitized MPCF, etc. Elements included in the lithium alloy may include aluminum, zinc, bismuth, cadmium, antimony, silicon, lead, tin, gallium, indium, etc.

In some examples, the anode active material above may include the silicon-based active material to implement a high-capacity lithium secondary battery. The silicon-based active material may include a siloxane-based compound, and the siloxane-based compound may be represented as SiOx (0<x<2).

The siloxane-based compound may be a polymer compound, and may be crystalline or amorphous. For example, the siloxane-based polymer compound may include one or more of an M-unit, a D-unit, and a T-unit.

The silicon-based active material may include, e.g., a silicon-carbon composite compound such as silicon carbide (SiC).

In some embodiments, the anode may include the carbon-based active material and the silicon-based active material. The silicon-based active material may be included in an amount from about 0.1 parts by weight to about 50 parts by weight based on 100 parts by weight of the carbon-based active material.

Within the above-described content range, a chemical bond between the silatane-based compound and the silicon-based active material may be sufficiently formed to improve a cohesion of the coating layer formed on the surface of the anode active material. Further, volume expansion of the anode due to the silicon-based active material may be suppressed, so that high-temperature storage and capacity properties of the secondary battery may both be enhanced.

For example, the anode active material may be mixed and stirred together with a binder, a conductive material and/or a dispersive agent in a solvent to form a slurry. The slurry may be coated on at least one surface of the anode current collector 125, dried and pressed to form the anode active material layer 120.

The binder and the conductive material substantially the same as or similar to those used for the cathode may also be used. In some embodiments, the binder for forming the anode 130 may include, e.g., a styrene-butadiene rubber (SBR) or an acrylic binder for consistency with a graphite-based active material, and may be used with a thickener such as carboxymethyl cellulose (CMC).

In example embodiments, the anode active material layer 120 may have a density in a range from 1.4 g/cc to 1.9 g/cc.

In some embodiments, an area and/or a volume of the anode 130 (e.g., a contact area with the separation layer 140) may be greater than that of the cathode 100. Thus, lithium ions generated from the cathode 100 may be easily transferred to the anode 130 without a loss by, e.g., precipitation or sedimentation.

The separator 140 may be interposed between the cathode 100 and the anode 130. The separator 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separator 140 may also include a non-woven fabric formed from a glass fiber with a high melting point, a polyethylene terephthalate fiber, etc.

The separator 140 may extend in a width direction in FIG. 1 between the cathode 100 and the anode 130, and may be folded and wound in a thickness direction of the secondary battery. Accordingly, a plurality of the cathodes 100 and anodes 130 may be stacked in the thickness direction by the separator 140.

In example embodiments, an electrode cell may be defined by the cathode 100, the anode 130 and the separator 140, and a plurality of the electrode cells may be stacked to form the electrode assembly 150 that may have e.g., a jelly roll shape. For example, the electrode assembly 150 may be formed by winding, stacking or folding the separator 140.

The electrode assembly 150 may be accommodated together with the electrolyte solution according to the above-described embodiments of the present disclosure in the case 160.

As illustrated in FIG. 1, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

FIG. 1 illustrates that the cathode lead 107 and the anode lead 127 are formed at the same side of the case 160, but the cathode lead 107 and the anode lead 127 may be formed at opposite sides.

For example, the cathode lead 107 may be formed at one side of the case 160, and the anode lead 127 may be formed at the other side of the case 160.

The lithium secondary battery may be fabricated into a cylindrical shape using a can, a prismatic shape, a pouch shape, a coin shape, etc.

Hereinafter, exemplary experimental examples are proposed to more concretely describe the present disclosure. However, the following examples are only given for illustrating the present invention and those skilled in the related art will obviously understand that various alterations and modifications are possible within the scope and spirit of the present invention. Such alterations and modifications are duly included in the appended claims.

### Preparation Example 1: Preparation of compound of Chemical Formula 1-1

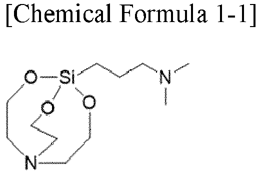

Triethanolamine (14.9 g, 100 mmol) and toluene (150 mL) as a solvent were added to a 250 mL round bottom flask to prepare a solution. (N,N-dimethylaminopropyl) trimethoxysilane (21.8 g, 105 mmol) was added to the solution, and then heated to about 110°C while being stirred.

After the heating, a white solid produced by stirring for 12 hours or more and cooling to room temperature was filtered, washed, and dried to obtain 24.7 g of (N,N-dimethylaminopropyl) silatrane in the form of a solid (yield: 95%).

¹H NMR (500 MHz, CDCl₃) δ = 3.76 (6H, t), 2.80 (6H, t), 2.33 (2H, m), 2.27 (6H, s), 1 . 5 9 (2H, m) 0.36 (2H, m)

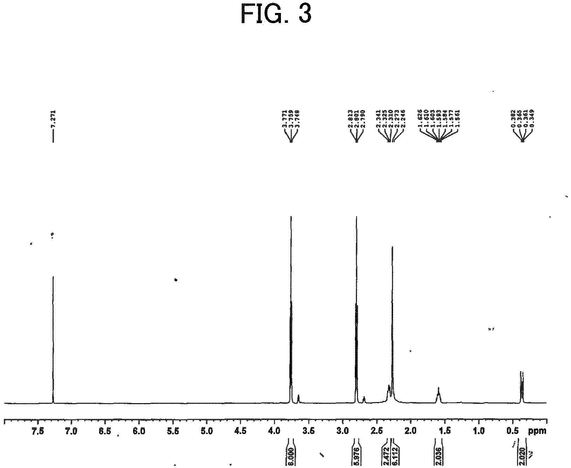

The ¹H NMR spectrum of the prepared compound is shown in FIG. 3

### Preparation Example 2: Preparation of the compound of Chemical Formula 1-2

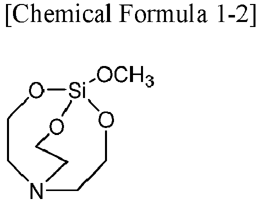

Triethanolamine (14.9 g, 100 mmol) and toluene (150 mL) as a solvent were added to a 250 mL round bottom flask to prepare solution. Tetramethoxysilane (15.2 g, 100 mmol) was added to the solution, and heated to about 100°C while being stirred.

After the heating, a white solid produced by stirring for 12 hours or more and cooling to room temperature was filtered, washed, and dried to obtain 16.4 g of methoxysilatrane in the form of a solid (yield: 80%).

¹H NMR (500 MHz, CDCl₃) δ = 3.83 (6H, t), 3.48 (3H, s), and 2.85 (6H, t)

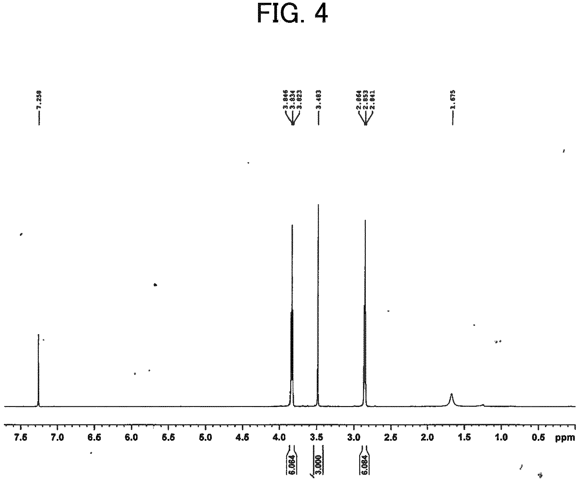

The ¹H NMR spectrum of the compound is shown in FIG. 4.

### Preparation Example 3: Preparation of compound of Chemical Formula 1-3

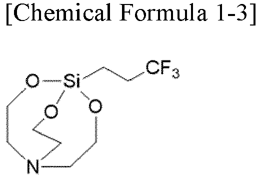

Triethanolamine (14.9 g, 100 mmol) and toluene (150 mL) as a solvent were added to a 250 mL round bottom flask to prepare a solution. Trimethoxy(3,3,3-trifluoropropyl)silane (3,2, 21.8 g, 100 mmol) was added to the solution, and heated to about 110°C while being stirred.

After the heating, a white solid produced by stirring for 12 hours or more and cooling to room temperature was filtered, washed, and dried to obtain 25.7 g of (3,3,3-trifluoropropyl)-silatrane in the form of a solid (yield 95%).

¹H NMR (500 MHz, CDCl₃) δ = 3.78 (6H, t), 2.84 (6H, t), 2.13 (2H, m), 0.58 (2H, m)

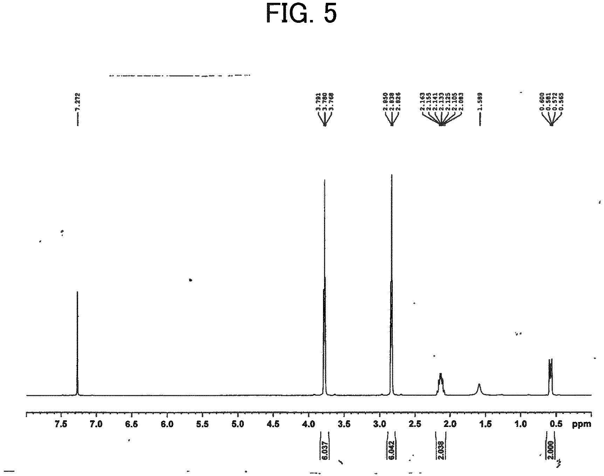

The ¹H NMR spectrum of the compound is shown in FIG. 5.

### Preparation Example 4: Preparation of compound of Chemical Formula 1-4

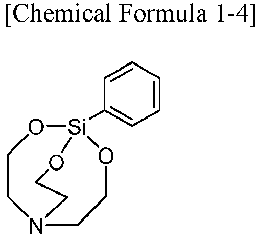

Triethanolamine (14.9 g, 100 mmol) and toluene (150 mL) as a solvent were added to a 250 mL round bottom flask to prepare a solution. Trimethoxyphenylsilane (19.8 g, 100 mmol) was added to the solution, and heated to about 110°C while being stirred.

After the heating, a white solid produced by stirring for 12 hours or more and cooling to room temperature was filtered, washed, and dried to obtain 24.6 g of phenylsilatrane in the form of a solid (yield 98 %).

¹H NMR (500 MHz, CDCl₃) δ = 7.62 (2H, d), 7.15 (3H,m), 3.80 (6H, t), 2.81 (6H, t)

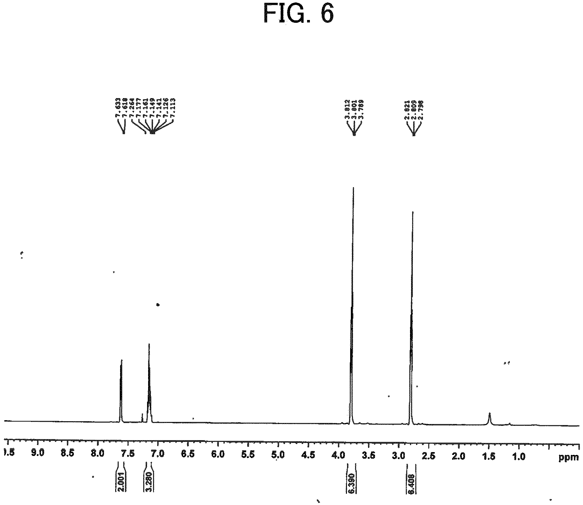

The ¹H NMR spectrum of the compound is shown in FIG. 6.

### Preparation Example 5: Preparation of compound of Chemical Formula 1-5

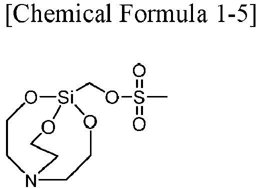

Triethanolamine (14.9 g, 100 mmol) and toluene (150 mL) as a solvent were added to a 250 mL round bottom flask. Chloromethyl triethoxy silane (17.1 g, 100 mmol) was added to the solution, and heated to about 110°C while being stirred.

After the heating, a white solid produced by stirring for 12 hours or more and cooling to room temperature was filtered, washed, and dried to obtain 17.8 g of chloromethyl silatrane in the form of a solid (yield 83%).

To a solution in which methylene chloride (30 mL) was added to chloromethyl silatrane (2.3 g, 10 mmol), sodium methanesulfonate (1.3 g, 11 mmol) was added and stirred, and heated to about 40°C while being stirred. After the heating, the mixture was stirred for at least 6 hours, cooled to room temperature, washed with water, and dried, thereby obtaining 1.2 g of methylsulfonyloxymethyl silatrane in the form of a solid (yield 43%).

¹H NMR (500 MHz, CDCl₃) = 3.85 (6H, t), 2.90 (6H, t), 2.64 (2H, s), 1.64(3H, s)

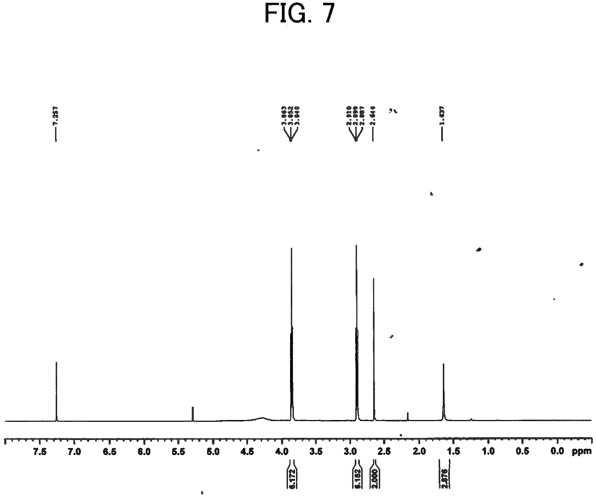

The ¹H NMR spectrum of the compound is shown in in FIG. 7.

### Preparation Example 6: Preparation of compound of Chemical Formula 1-6

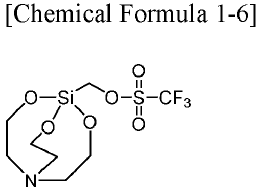

Chloromethyl silatrane (2.3 g, 10 mmol) and methylene chloride (30 mL) as a solvent were added to a 100 mL round bottom flask to prepare a solution. Sodium trifluoromethanesulfonate (12 g, 11 mmol) was added to the solution, and heated to about 40°C while being stirred.

After the heating, the mixture was stirred for 6 hours or more, cooled to room temperature, washed with water, and dried to obtain 1.1 g of trifluoromethylsulfonyloxy silatrane in the form of a solid (yield: 45%).

¹H NMR (500 MHz, CDCl₃) δ = 3.84 (6H, t), 2.89 (6H, t), 2.62(2H, s)

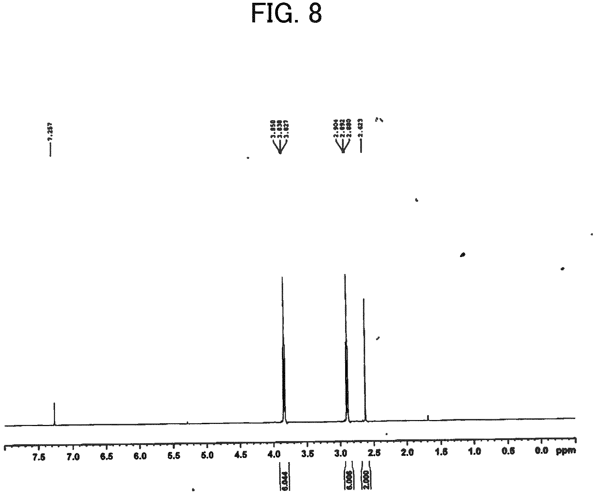

The 1H NMR spectrum of the compound is shown in FIG. 8.

### Preparation Example 7: Preparation of the compound of Chemical Formula 1-7

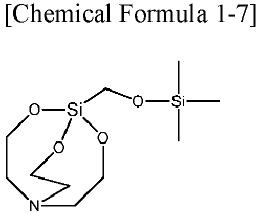

Chloromethyl silatrane (2.3 g, 10 mmol) and methylene chloride (30 mL) as a solvent were added to a 100 mL round bottom flask to prepare a solution. Sodium trimethylsilanolate (1.4 g, 11 mmol) was added to the solution, and heated to about 40°C while being stirred.

After the heating, the mixture was stirred for 6 hours or more, washed with water, and dried to obtain 1.5 g of trimethylsilyloxymethyl silatrane in the form of a solid (yield 54%)

¹H NMR (500 MHz, CDCl₃) δ = 3.86 (6H, t), 2.90 (6H, t), 2.65 (2H, s), 0.09 (9H, s)

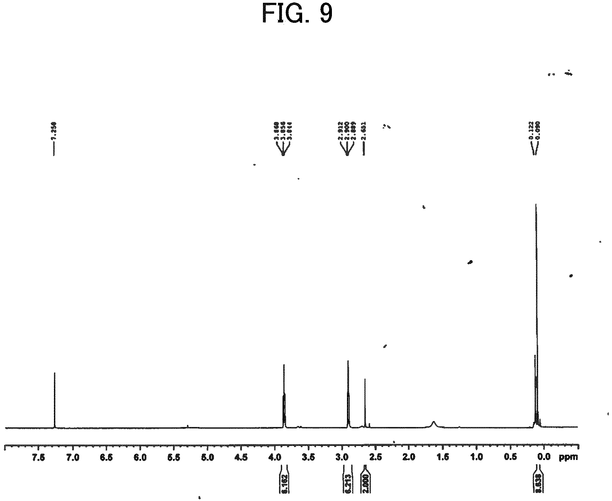

The ¹H NMR spectrum of the compound is shown in FIG. 9.

### Preparation Example 8: Preparation of compound of Chemical Formula 1-8

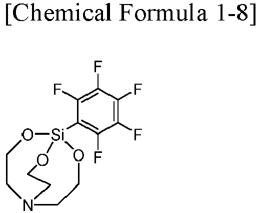

Triethanolamine (14.9 g, 100 mmol) and benzene (150 mL) as a solvent were added to a 250 mL round bottom flask to prepare a solution. Triethoxy (pentafluorophenyl)silane (33.1 g, 100 mmol) was added to the solution, and heated to about 80°C while being stirred.

After the heating, a white solid produced by stirring for 12 hours or more and cooling to room temperature was filtered, washed, and dried to obtain 16 g of pentafluorophenyl silatrane in the form of a solid (yield 47%).

¹H NMR (500 MHz, CDCl₃) δ = 3.90 (6H, t), 2.96 (6H, t)

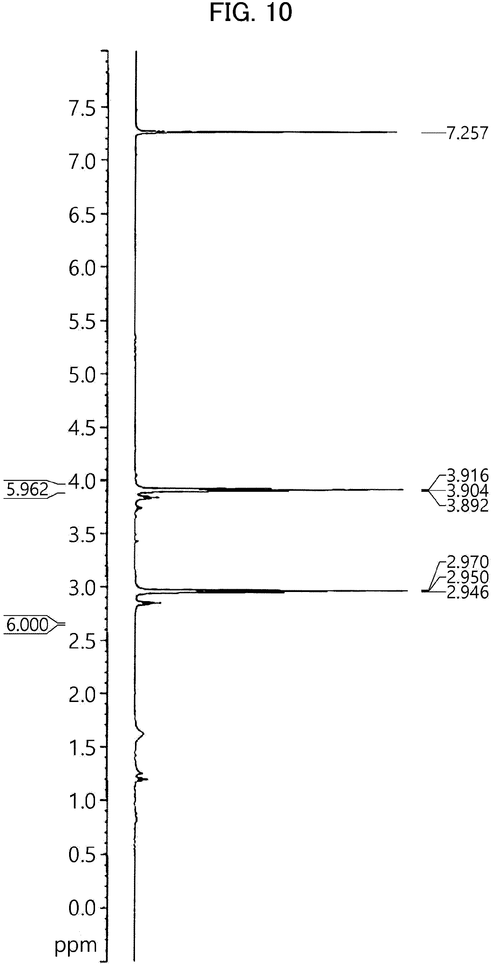

The ¹H NMR spectrum of the compound is shown in FIG. 10.

### Example 1

The silatane-based compound of Preparation Example 1, a non-aqueous mixed solvent, a lithium salt and an additive were mixed to obtain an electrolyte solution for a secondary battery. The non-aqueous mixed solvent included 25 vol% of EC, 45 vol% of EMC and 30 vol% of DEC based on a total volume of the solvent. The lithium salt was LiPF₆, and a concentration of the lithium salt was within 1.0 M to 1.1 M. The additive included 3 wt% of fluoroethylene carbonate (FEC), 0.5 wt% of propanesultone (PS), and 0.5 wt% of ethylene sulfate (ESA) based on a total weight of the electrolyte solution.

The silatane-based compound was included in an amount of 0.5 wt% based on the total weight of the electrolyte solution.

LiNi_{0.8}Co_{0.1}Mn_{0.1}O₂ as a cathode active material, polyvinylidene fluoride (PVdF) as a binder, and a carbon-based conductive agent were mixed in a weight ratio of 98:1:1, and then dispersed in N-methyl-2-pyrrolidone to prepare a cathode slurry. The slurry was coated on an aluminum foil having a thickness of 20 µm, dried and pressed to form a cathode.

Artificial graphite as an anode active material and a silicon-based active material, styrene-butadiene rubber (SBR) as a binder, and carboxymethyl cellulose (CMC) as a thickener were mixed in a weight ratio of 97:1:2 and then dispersed in water to prepare an anode slurry. The slurry was coated on a copper foil having a thickness of 15 µm, dried and pressed to form an anode.

A film separator formed of polyethylene (PE) having a thickness of 25 µm was stacked between the above-manufactured electrodes to form a pouch cell having a thickness of 6 mm x a width of 60 mm x a length of 90 mm, and the electrolyte solution for a secondary battery was injected to obtain a 2.0 Ah-level secondary battery.

### Examples 2 to 11

A secondary battery was manufactured by the same manner as that in Example 1, except that types and contents of the silatane-based compound, types and contents of the solvent, and the types and contents of the additive were changed as shown in Table 1 below.

### Comparative Examples 1 to 3

A secondary battery was manufactured by the same method as that in Example 1, except that types and contents of the solvent, and types and contents of the additive were changed as shown in Table 1 below while the silatane-based compound was not used.

The types and the contents of the silatane-based compound contained in the electrolyte solutions of Examples and Comparative Examples, the types and volume ratios of the solvents, and the types and the contents of the additives are shown in Table 1.

**[Table 1]**

| | silatrane-based compound | | solvent | additive |
|---|---|---|---|---|
| | type (Preparation Example) | content (wt%) | type (volume ratio) | type (content, wt%) |
| Example 1 | 1 | 0.5 | EC/EMC/DEC (25/45/30) | FEC(3), PS(0.5), ESA(0.5) |
| Example 2 | 2 | 0.5 | EC/EMC/DEC (25/45/30) | FEC(3), PS(0.5), ESA(0.5) |
| Example 3 | 3 | 0.5 | EC/EMC/DEC (25/45/30) | FEC(3), PS(0.5), ESA(0.5) |
| Example 4 | 4 | 0.5 | EC/EMC/DEC (25/45/30) | FEC(3), PS(0.5), ESA(0.5) |
| Example 5 | 5 | 0.5 | EC/EMC (25/75) | FEC(4), PS(0.2) |
| Example 6 | 6 | 0.5 | EC/EMC (25/75) | FEC(4), PS(0.2) |
| Example 7 | 7 | 0.5 | EC/EMC/DEC (25/45/30) | FEC(3), PS(0.5), ESA(0.5), W3(1.0) |
| Example 8 | 8 | 0.5 | EC/EMC (25/75) | FEC(4), PS(0.2) |
| Example 9 | 1 | 1 | EC/EMC/DEC (25/45/30) | FEC(3), PS(0.5), ESA(0.5) |
| Example 10 | 1 | 2 | EC/EMC/DEC (25/45/30) | FEC(3), PS(0.5), ESA(0.5) |
| Example 11 | 1 | 3 | EC/EMC/DEC (25/45/30) | FEC(3), PS(0.5), ESA(0.5) |
| Comparative Example 1 | - | - | EC/EMC/DEC (25/45/30) | FEC(3), PS(0.5), ESA(0.5) |
| Comparative Example 2 | - | - | EC/EMC (25/75) | FEC(4), PS(0.2) |
| Comparative Example 3 | - | - | EC/EMC/DEC (25/45/30) | FEC(3), PS(0.5), ESA(0.5), W3(1.0) |

In Table 1, EC represents ethylene carbonate, EMC represents ethylmethyl carbonate, DEC represents diethyl carbonate, FEC represents fluoroethylene carbonate, PS represents propane sultone, W3 represents lithium difluorophosphate (LiPO₂F₂), and ESA represents ethylene sulfate.

### Experimental Example

Properties of the secondary batteries of Examples and Comparative Examples were evaluated according to the following Experimental Examples, and the results are shown in Table 2. Items that were not evaluated in Examples and Comparative Examples are designated as X.

### (1) Evaluation on initial properties

### 1) Measurement of initial capacity

Each of the secondary batteries of Examples and Comparative Examples was charged with 0.5C rate CC-CV (4.2V, 0.05C cut-off) at room temperature, and then discharged (2.7V cut-off) at 0.5C rate CC to measure an initial capacity of the battery.

### 2) Measurement of initial resistance

Each of the secondary batteries of Examples and Comparative Examples was charged with 0.5C rate CC-CV (4.2V, 0.05C cut-off) at room temperature, and then discharged (2.7V cut-off) at 0.5C rate CC tree times, and then an initial resistance of the battery was measured.

### (2) Evaluation on high-temperature storage properties

### 1) Evaluation on capacity retention in high temperature storage

The secondary batteries of Examples and Comparative Examples were charged with 0.5C rate CC-CV (4.2V, 0.05C cut-off) at room temperature, and then stored in an oven at 60°C for 6, 12 or 16 weeks. Thereafter, each secondary battery was taken out of the oven and left for 30 minutes, and a capacity measured after discharging (2.7V cut-off) at 0.5C rate CC was divided by the initial capacity measured in the above (1)-1 to calculate a capacity retention (%).

### 2) Evaluation on thickness increase ratio in high temperature storage

The secondary batteries of Examples and Comparative Examples were charged with 0.5C rate CC-CV (4.2V, 0.05C cut-off) at room temperature, and then stored in an oven at 60°C for 6, 12 or 16 weeks. After the battery was taken out of the oven, a central thickness was measured with a thickness meter in a hot state. The measured thickness was divided by an initial thickness before the storage at 60°C to calculate a thickness change ratio (thickness after the storage/initial thickness)* 100(%)). The initial thickness of the secondary battery of each Example was ±2.5% based on a value of Comparative Example 1, and a decimal point was deleted.

### 3) Evaluation on resistance increase ratio in high temperature storage

The secondary batteries of Examples and Comparative Examples were charged with 0.5C rate CC-CV (4.2V, 0.05C cut-off) at room temperature, and then stored in an oven at 60°C for 6, 12 or 16 weeks. Thereafter, each secondary battery was taken out of the oven and left for 30 minutes, and a resistance was measured by discharging (2.7V cut-off) at 0.5C rate CC. The measured resistance was divided by the initial resistance measured in the above (1)-2 to calculate a resistance increase ratio (%). A decimal point was deleted.

### (3) Evaluation on life-span properties

The secondary batteries of Examples and Comparative Examples were charged at 0.5C rate CC-CV (4.2V, 0.05C cut-off) at room temperature, and then discharged (2.7V cut-off) at 0.5C rate CC as a single cycle. 500 cycles or 1000 cycles were performed, and then a capacity of each battery was measured. The measured capacity was divided by the initial capacity measured in the above (1) to calculate a capacity retention (%).

**[Table 2]**

| | | initial property | | high temperature storage property¹⁾ | | | life-span property (capacity retention, %) | |
|---|---|---|---|---|---|---|---|---|
| | | capacity (mAh) | resistance (mΩ) | capacity retention (%) | thickness increase ratio (%) | resistance increase ratio (%) | 25°C, 1000 cycles | 25°C, 500 cycles |
| Comparative Example | 1 | 2082 | X | 68.7 | 220 | 164 | 68.4 | X |
| | 2 | 2123 | 20.4 | 56.9* | X | 233* | X | 81.8 |
| | 3 | 1867 | X | 86.8** | 190** | X | X | X |
| Example | 1 | 2037 | X | 73.3 | 170 | 140 | 72.6 | X |
| | 2 | 2078 | X | 65.7 | 174 | 148 | 71.8 | X |
| | 3 | 2081 | X | 701 | 191 | 155 | 70.8 | X |
| | 4 | 2079 | X | 69.3 | 180 | 161 | 72.0 | X |
| | 5 | 2115 | 20.5 | 60.9* | X | 211* | X | 85.1 |
| | 6 | 2117 | 20.8 | 59.3* | X | 232* | X | 84.4 |
| | 7 | 1867 | X | 85.8** | 181** | X | X | X |
| | 8 | 2127 | 21.1 | 60.0* | X | 209* | X | 86.2 |
| | 9 | 1988 | X | 70.3 | 176 | 160 | 74.7 | X |
| | 10 | 1907 | X | 68.1 | 180 | 171 | 70.0 | X |
| | 11 | 1797 | X | 60.9 | 191 | 205 | 61.2 | X |

| | | | | | | | | |
|---|---|---|---|---|---|---|---|---|
| 1) The denotation * represents evaluation result values after the 6 week-storage in the oven when evaluating the high temperature storage properties. The denotation ** represents evaluation result values after the 12 week-storage in the oven when evaluating the high temperature storage properties. The values with no denotation represent the evaluation result values after the 16 week-storage in the oven when evaluating the high temperature storage properties. | | | | | | | | |

Referring to Table 2, in the batteries of Examples, more improved high-temperature storage properties (low resistance and thickness increase ratios) were provided than those from Comparative Examples, while maintaining a similar level of initial capacity and capacity retention to that from Comparative Examples. Additionally, the batteries of Examples provided high capacity retentions during the repeated charging and discharging.

The batteries of Examples 1 to 4, and 9 to 11 provided lower thickness increase ratios when stored at high temperature and higher capacity retentions during the repeated charging and discharging than those from Comparative Example 1 having the electrolyte solution that included the same additive and no silatane-based compound.

The batteries of Examples 5, 6 and 8 provided higher capacity retentions when stored at high temperature than those from Comparative Example 2 having the electrolyte solution that included the same additive and no silatane-based compound. Further, higher capacity retentions were provided during the repeated charging and discharging.

The battery of Example 7 provided the capacity retention during high-temperature storage similar to that from Comparative Example 3 including the electrolyte solution that included the same additive the same composition, and provided low thickness increase ratio and improved dimensional stability during high-temperature storage.

## Claims

1. An electrolyte solution for a secondar battery, comprising:
a lithium salt, a non-aqueous organic solvent, and a silatane-based compound represented by Chemical Formula 1: 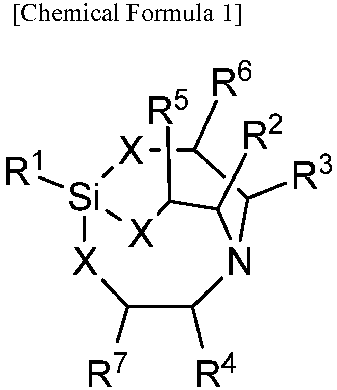
wherein, in Chemical Formula 1, X is each independently oxygen, sulfur, nitrogen or phosphorus,
R¹ is an electron donating group, a C2 to C10 tertiary aminoalkyl group, a C1 to C10 haloalkyl group, a C6 to C15 aryl group, a C6 to C15 haloaryl group, or a hydrocarbon group including at least one selected the group consisting of a C1 to C10 alkyl group, a C1 to C10 haloalkyl group, a sulfonyloxy group, a C1 to C10 alkylene group and a C3 to C15 trialkylsilyloxy group, and
R², R³, R⁴, R⁵, R⁶ and R⁷ are each independently hydrogen, a C1 to C6 linear alkyl group, a C3 to C6 branched alkyl group or a C3 to C6 cyclic alkyl group.

2. The electrolyte solution for a lithium secondary battery according to claim 1, wherein the electron donating group includes at least one selected from the group consisting of a C1 to C10 alkoxy group, a cyano group, a halogen group, a vinyl group, a hydroxy group, a primary to tertiary amine group, an imine group, a thiol group and a sulfide group.

3. The electrolyte solution for a secondary battery according to claims 1 or 2, wherein, in Chemical Formula 1, X is oxygen.

4. The electrolyte solution for a secondary battery according to one of claims 1 to 3, wherein, in Chemical Formula 1, R¹ is a methoxy group, an ethoxy group, a propoxy group, a dimethylamine group, a diethylamine group, a methylethylamine group, a dimethylaminomethyl group, a dimethylaminoethyl group, a dimethylaminopropyl group, a methylethylaminomethyl group, a methylethylaminoethyl group, a methylethylaminopropyl group, a diethylaminomethyl group, a diethylaminoethyl group, a diethylaminopropyl group, a trifluoromethyl group, a trifluoroethyl group, a trifluoropropyl group, a phenyl group, a naphthyl group, a fluorophenyl group, a difluorophenyl group, a trifluorophenyl group, a tetrafluorophenyl group, a pentafluorophenyl group, a methylsulfonyloxymethylene group, a ethylsulfonyloxymethylene group, a trifluoromethylsulfonyloxymethylene group, a pentafluoroethylsulfonyloxymethylene group or a trimethylsilyloxymethylene group.

5. The electrolyte for a secondary battery according to one of claims 1 to 4, wherein, in Chemical Formula 1, R², R³, R⁴, R⁵, R⁶ and R⁷ are each hydrogen.

6. The electrolyte solution for a secondary battery according to one of claims 1 to 5, wherein a content of the silatrane-based compound is in a range from 0.1 wt% to 5.0 wt% based on a total weight of the electrolyte solution.

7. The electrolyte solution for a secondary battery according to one of claims 1 to 6, further comprising an auxiliary additive that includes at least one selected from the group consisting of a fluorine-containing carbonate-based compound, a vinylidene carbonate-based compound and a sulfinyl group-containing compound.

8. The electrolyte solution for a secondary battery according to claim 7, wherein the fluorine-containing carbonate-based compound includes fluoroethylene carbonate, the vinylidene carbonate-based compound includes vinylethylene carbonate, and the sulfinyl group-containing compound includes at least one of 1,3-propane sultone and ethylene sulfate.

9. The electrolyte solution for a secondary battery according to claims 7 or 8, wherein a content of the auxiliary additive is in a range from 0.1 wt% to 10 wt% based on a total weight of the electrolyte solution.

10. A secondary battery, comprising:
a cathode(100) comprising a lithium metal oxide;
an anode(130) facing the cathode and comprising a carbon-based active material or a silicon-based active material; and
the electrolyte solution for a secondary battery according to one of claims 1 to 9.

11. The secondary battery according to claim 10, wherein the anode(130) comprises the carbon-based active material and the silicon-based active material, and the silicon-based active material is included in an amount from 0.1 parts by weight to 50 parts by weight based on 100 parts by weight of the carbon-based active material.

12. The secondary battery according to claim 10, wherein a coating layer derived from the silatrane-based compound is formed on a surface of an active material of the anode.

13. The secondary battery according to claim 12, wherein a C-X bond is formed between the carbon-based active material and the coating layer derived from the silatrane-based compound.

14. The secondary battery according to claim 12, wherein a Si-X bond is formed between the silicon-based active material and the coating layer derived from the silatrane-based compound.
